# EUROPÄISCHE PATENTANMELDUNG

(11) **EP 4 099 529 A1**
(43) Veröffentlichungstag der Anmeldung: **07.12.2022**
(21) Anmeldenummer: 22174469.1
(22) Anmeldetag: 20.05.2022
(51) Int. Cl.: H02G 3/18, E04B 5/48, H02G 3/08

(54) **SCHALUNGSELEMENT**

(30) Priorität: 02.06.2021 DE 102021114304
(71) Anmelder: Tehalit GmbH, 67716 Heltersberg (DE)
(72) Erfinder: GROßE, Johannes, 67434 Neustadt (DE); IHL, Jasmin, 66440 Blieskastel (DE); LETTERMANN, Gert, 67688 Rodenbach (DE)
(74) Vertreter: Cabinet Nuss

(57) **Zusammenfassung**

Schalungselement zur Formung von innerhalb einer Masse eingebetteten Hohlräumen, vorzugsweise innerhalb einer aushärtbaren, flächig ausgebildeten Masse, wobei das Schalungselement einen Sockel aufweist, der mit einer Tragstruktur für die Masse verbindbar ist, und das Schalungselement einen von seinem Sockel ausgehenden und der Tragstruktur abgewandten Stutzen aufweist, wobei der Sockel einen ersten Hohlraum ausbildet mit mindestens einem Anschlussquerschnitt für lateral anschließbare Leitungen eines Leitungssystems, und wobei der Stutzen einen zweiten oberflächlich zugänglichen Hohlraum ausbildet zur Aufnahme einer Anschluss-, Schalt- oder Verteilereinrichtung des Leitungssystems,
wobei das Schalungselement als verlorene und in der Masse verbleibende Schalung ausgebildet ist, wobei der Sockel im Bereich eines Anschlussquerschnitts mehrere auf unterschiedliche Formen von Kanälen, Kabeln, Rohren oder Leitungen des Leitungssystems angepasste Anschlussformen aufweist, wobei eine jeweils kleiner dimensionierte Anschlussform geringeren Volumens aus einer jeweils größer dimensionierten Anschlussform größeren Volumens lateral nach außen vorspringt, und wobei der Stutzen sich zur Oberfläche der umgebenden Masse hin konisch verjüngt.

## Beschreibung

Die Erfindung betrifft ein Schalungselement zur Formung von miteinander verbundenen und innerhalb einer umgebenden Masse eingebetteten Hohlräumen, vorzugsweise innerhalb einer aushärtbaren, flächig ausgebildeten Masse, wie etwa Fließestrich oder Fließbeton, wobei
- das Schalungselement einen Sockel aufweist, der mit einer Tragstruktur verbindbar ist, an der oder auf der die Masse angeordnet ist, und
- das Schalungselement einen von seinem Sockel ausgehenden und der Tragstruktur abgewandten Stutzen aufweist, also ein Stutzen, der sich in einer von der Tragstruktur hinweg weisenden Richtung erstreckt,
- wobei der Sockel mindestens einen ersten Hohlraum ausbildet mit mindestens einem Anschlussquerschnitt für lateral anschließbare und in der Masse einbettbare Kanäle, Kabel, Rohre oder Leitungen eines Leitungssystems, und
wobei der Stutzen mindestens einen zweiten oberflächlich zugänglichen Hohlraum ausbildet zur Aufnahme einer Anschluss-, Schalt- oder Verteilereinrichtung des Leitungssystems.

Ebenfalls betrifft die Erfindung ein Verfahren zur Herstellung eines Leitungssystems mit in einem Bodenbelag aus Estrich- oder Fließbeton eingebetteten Kanälen, Kabeln, Rohren oder Leitungen und mit mindestens einem erfindungsgemäßen Schalungselement sowie ein solches Leitungssystem.

Unterflurinstallationen in Form von in Estrichböden oder Fließbetonschichten verlegten Kabeln, Leitungen, Rohren oder Kanälen sind im Stand der Technik in verschiedenen Ausführungen bekannt. Ebenfalls bekannt ist auch die Anordnung von mit solchen Kanal-, Kabel-, Rohr- oder Leitungssystemen verbundenen und von außen zugänglichen Hohlräumen oder Schächten. Solche Schächte sind üblicherweise vorgesehen, um eine Zugänglichkeit zu Wartungspunkten oder Anschlüssen bereitzustellen oder zur Aufnahme von Verteiler- und Schalteinrichtungen, z.B. für Unterfluranschlussdosen.

So offenbart beispielsweise die DE 202 14 140 U1 eine Unterflur-Einbaudose für eine Unterflurinstallation in Fließestrich, die als zylindrischer Hohlkörper ausgebildet ist und in ihrer Höhe durch eine Nivelliereinrichtung so einstellbar ist, dass nach Vergießen des Estrichs die Dose von der Estrichoberfläche aus erreichbar bleibt. Nachteilig ist hierbei der relativ hohe Aufwand, der nach Aushärtung des Estrichs zur Entfernung des Hohlkörpers erforderlich ist. Auch sind keine Anschlussmöglichkeiten oder vorbereitete Verbindungen für Kanäle, Kabel oder Leitungen an die Einbaudose vorgesehen, sodass eine relativ aufwändige Einzelfertigung der Anschlussbereiche nötig ist und vorgefertigte weitere Einbauten sowie eine passgenaue Bearbeitung bei der Verlegung erforderlich sind.

Ähnliches gilt für den in der DE 2 106 482 A offenbarten Kanal zur Verlegung in einem Fußboden oder in der Wand von Gebäuden. Der Kanal ist mit Auslassöffnungen für die Installation elektrischer Leitungen versehen. Dazu trägt die Abdeckung des Kanals an den für eine Auslassöffnung vorgesehenen Stellen einen Aufsatz, dessen obere Öffnung mit einem Stopfen verschließbar ist. Der Stopfen kann z.B. nach dem Vergießen und der Aushärtung eines Fließestrichs entfernt werden. Danach ist zwar der Kanal und dessen Anschluss bereits erstellt, jedoch ist das Öffnen des Aufsatzes und dessen Einstellung auf verschiedene Estrichhöhen relativ schwierig. Zudem ist oft eine Randbearbeitung der Schachtöffnung erforderlich.

Bei einer Reihe von bekannten Lösungen bestehen unter anderem Probleme bei der Kombination oder der Verbindung von unterschiedlich ausgebildeten Kabelkanälen oder Leitungen mit Unterfluranschlussdosen und bei der Herstellung der entsprechenden Schächte in der umgebenden Masse. Das führt dazu, dass jedes Kanal- Kabel- oder Leitungssystem spezielle Unterflur-Anschlusskonstruktionen oder Schächte erfordert, die nur für dieses eine System brauchbar sind. Auch ist es bekannt, zur Herstellung eines entsprechenden Schachtes für eine Unterfluranschlussdose lediglich einen Styroporblock oder einen ähnlichen Platzhalter zu verwenden, oft als Wegwerfartikel, was natürlich zu erhöhten Mengen an Abfall führt.

Für die Erfindung bestand also die Aufgabe, ein Schalungselement zur Bildung von Hohlräumen innerhalb einer umgebenden Masse bereitzustellen, insbesondere für Unterflurinstallationen in Fließestrich, wobei das Schalungselement für verschiedene Systeme von Leitungen, Kabeln, Rohren oder Kabelkanälen anwendbar ist, sich auf einfache Weise an verschiedene Höhen oder Lagendicken einer umgebenden Masse anpassen lässt, sich einfach, schnell und ohne besondere Einrichtungen oder Werkzeuge montieren lässt und insbesondere auf einfache Weise kostengünstig herzustellen ist.

Gelöst wird diese Aufgabe durch ein Schalungselement mit den Merkmalen des Hauptanspruchs. Weitere vorteilhafte Ausbildungen sind in den Unteransprüchen offenbart. Ebenfalls ist ein Kanal-, Kabel- oder Leitungssystem mit dem erfindungsgemäßen Schalungselement offenbart, sowie ein Verfahren zur Herstellung eines in einem Bodenbelag aus Estrich- oder Fließbeton eingebetteten Leitungssystems aus Kanälen, Kabeln, Rohren oder Leitungen.

Das Schalungselement ist dabei als verlorene und in der Masse verbleibende Schalung ausgebildet, wobei ein einen ersten Hohlraum bildender Sockel des Schalungselements im Bereich eines Anschlussquerschnitts mehrere auf unterschiedliche Formen von Kanälen, Kabeln, Rohren oder Leitungen des Leitungssystems angepasste Anschlussformen aufweist. Mindestens einer der Anschlussquerschnitte ist dabei so ausgebildet, dass, ausgehend von einer Mittellinie des Schalungselementes, eine jeweils kleiner dimensionierte Anschlussform geringeren Volumens aus einer jeweils größer dimensionierten Anschlussform größeren Volumens lateral nach außen vorspringt.

Darüber hinaus ist das erfindungsgemäße Schalungselement so ausgebildet, dass ein einen zweiten Hohlraum ausbildender Stutzen sich vom Sockel ausgehend zur Oberfläche der umgebenden Masse erstreckt. Der Stutzen kann sich dabei vom Sockel ausgehend konisch verjüngen.

Dadurch, dass das Schalungselement im Bereich des Anschlussquerschnitts mehrere auf unterschiedliche Formen von Kanälen, Kabeln, Rohren oder Leitungen des Leitungssystems angepasste Anschlussformen aufweist, ist das Schalungselement universell zum Anschluss bzw. zur Verbindung mit einer Reihe von verschiedenen Leitungen, Kanälen, Kabeln und Rohren innerhalb eines Leitungssystems geeignet. Die Anschlussformen können so gestaltet sein, dass ausgehend von einer Mittellinie des Schalungselementes eine jeweils kleiner dimensionierte Anschlussform geringeren Volumens aus einer jeweils größer dimensionierten Anschlussform größeren Volumens lateral nach außen vorspringt. Andere Gestaltungen sind natürlich ebenfalls möglich, etwa Anschlusskonturen, die nach außen jeweils größer werden. Hier könnten die nach innen kleiner werdenden Anschlussformen bspw. einen Anschlag für in die Anschlussform eingeschobene Kabelschläuche oder Kabelkanäle bilden. Es ist auch denkbar, Abschnitte von Anschlussformen mittels Bereichen kleinerer oder größerer Abmessungen voneinander zu separieren, also mittels Einschnürungen oder Ausstülpungen.

Wenn man dann das Schalungselement innerhalb eines Leitungssystems mit z.B. Einzelrohren oder kleiner dimensionierten Leitungen oder Kanälen verwenden will, so öffnet man eine äußere Anschlussform mit einer geeigneten kleineren oder kleinsten Dimension. Ebenso kann das Schalungselement zum Anschluss von größer dimensionierten Leitungen oder Kanälen genutzt werden, in denen man die äußeren Anschlussformen abschneidet und damit schließlich diejenige Anschlussform öffnet, die zu den größer dimensionierten Leitungen oder Kanälen passt. Ebenfalls ermöglicht das erfindungsgemäße Schalungselement, dass relativ zueinander größere und kleinere Anschlussformen zum Anschluss von größeren und kleineren Leitungen an ein und dasselbe Schalungselement genutzt werden. Die Stufung der einzelnen Dimensionen der Anschlussformen entspricht dabei den gängigsten Leitungstypen, Rohren oder Kanälen. Die hier verwendeten Bestimmungen "größer", "größere" oder "kleiner", "kleinere" für die gestuft ausgebildeten Anschlussformen sind für den Fachmann insofern klar, als sich diese Angaben auf die jeweils lateral benachbarte, nächste Stufe der Anschlussform und ihre Dimensionen beziehen und zudem relativ zu einem Bezugspunkt (Mittellinie) ausgebildet sind. Die kleineren Anschlussformen liegen somit weiter außen und die größeren Anschlussformen weiter zur Mitte des Schalungselements hin.

In einer vorteilhaften Weiterbildung ist der Stutzen nach außen über die Masse vorstehend ausgebildet, beim Fließestrich also nach oben über die Oberfläche der aushärtenden Masse aufragend ausgebildet. Das ist besonders beim Vergießen von Fließbeton/Fließestrich wichtig, der sich ja über größere Flächen auch auf einem etwas unebenen Untergrund mit einer im Wesentlichen waagerechten Oberfläche ausbildet.

Der bei einer oder mehreren Ausgestaltungen sich zur Oberfläche der umgebenden Masse konisch verjüngend ausgebildete Stutzen des Schalungselementes bietet den Vorteil, dass nach Fertigstellung oder Aushärtung der umgebenden Masse, also zum Beispiel nach dem Vergießen und Aushärten eines Estrichbetons, der Stutzen nahe der Oberfläche abgeschnitten und der abgeschnittene Endteil des Stutzens umgekehrt wieder in die entstehende Öffnung eingesetzt werden kann. So lässt sich die Schachthöhe ohne weitere konstruktive Hilfsmittel auf eine beliebige bzw. auf die sich ergebende Höhe der Masse einstellen. Die konische Ausbildung des Stutzens verhindert dabei ein Hineinrutschen des abgeschnittenen, ebenfalls konischen Endteils des Stutzens in den geöffneten Stutzenhohlraum, hält ihn aber trotzdem sicher an seinem Platz und bildet so einen temporären Deckel, der eine Verschmutzung des vom Stutzen gebildeten Hohlraums während der weiteren Bearbeitung verhindert.

In einer weiteren vorteilhaften Ausbildung weist der Stutzen an seinem äußeren Ende, also an seinem der Tragstruktur und dem Sockel abgewandten Ende, einen lösbaren Deckel oder einen für ein Abtrennen vorbereiteten Kopfbereich auf. Beispielsweise können hierzu im Kopfbereich ein oder mehrere umlaufende Perforationslinien vorgesehen sein. Damit kann der Stutzen für verschiedene Dicken von Estrich oder Putz eingesetzt werden. Die Verlegung erzeugt im Hinblick auf das Schalungselement wenig Abfall, besondere Stopfen, etwa solche aus Styropor, sind nicht erforderlich. In einer alternativen Ausbildung kann der Stutzen an seinem äußeren Ende auch einen Deckel aufweisen, der etwa mit einer Schnapp- oder Rastverbindung fixiert ist, während der Montage fixiert bleibt und der nach Abschnitt bzw. Längenanpassung des Stutzenendes auf das verbleibende Stutzenstück aufgeklemmt werden kann.

Darüber hinaus können auf einen erfindungsgemäß konisch ausgebildeten und derart vorstehenden Stutzen auf einfache Weise auch Adapter oder Formstücke aufgesetzt werden, beispielsweise Rohrstücke zur Verlängerung oder auch Adapter anderer Form zur Aufnahme von besonderen Innenteilen oder Schaltelementen. Das ist insbesondere mit einer weiteren vorteilhaften Ausbildung des Schalungselements möglich, bei dem der Stutzen Vorsprünge oder Absätze aufweist, an denen auf den Stutzen aufgesetzte Adapter oder Rohrstücke abstützbar sind. Die Vorsprünge oder Absätze können sowohl auf der Innenseite als auch auf der Außenseite des Stutzens vorgesehen sein. Auf der Innenseite wären dann die Vorsprünge oder Absätze erst nach Abtrennen des obersten Stutzenteils zugänglich. Derart aufgesetzte Adapter können unterschiedliche Formen besitzen, also beispielsweise auch eckig sein, und müssen lediglich in ihren Anschlussbereichen so ausgebildet sein, dass sie auf den Stutzen aufsetzbar sind.

Eine vorteilhafte Weiterbildung besteht darin, dass das Schalungselement einstückig ausgebildet ist, wobei es beispielsweise aus Kunststoff oder Kunststoffrecyclat besteht. Insbesondere dann, wenn das Schalungselement zur Erstellung von Hohlräumen innerhalb von Fließestrich verwendet wird, also innerhalb einer nach Aushärtung festen und formstabilen Masse, ist es ausreichend, das Schalungselement als relativ dünnwandiges Kunststoffteil auszubilden. Solche Kunststoffteile sind sehr einfach durch Tiefziehen oder Spritzgießen herzustellen und besitzen bis zum Aushärten des umgebenden Fließestrichs oder Fließbetons genügend Festigkeit zur Fixierung bzw. Formgebung der Hohlräume. Dazu ist es gerade bei einer verlorenen Schalung unter Umweltgesichtspunkten vorteilhaft, die Kunststoffschmelze zur Herstellung des Schalungselements aus einem Kunststoffrecyclat herzustellen.

Eine weitere vorteilhafte Ausbildung besteht darin, dass der Sockel im Bereich der Anschlussquerschnitte lösbare Deckel, lateral gestuft ineinander gesteckte Endstücke oder abtrennbare laterale Endstücke aufweist. In ähnlicher Form, wie oben bei der Ausführung des Stutzens erwähnt, können auch die Anschlussquerschnitte für ein Abtrennen oder Öffnen der äußeren Anschlussformen vorbereitet werden, so dass dadurch jeweils diejenige Anschlussform zugänglich wird, die zu den vorgesehenen Dimensionen der anzuschließenden Leitungen passt. So können z.B. entsprechend verlaufende Perforationslinien in den lateral vorspringenden Anschlussquerschnitten des Schalungselements vorgesehen sein oder auch steckbare, deckelartige Endstücke.

Eine weitere vorteilhafte Ausbildung besteht darin, dass der Sockel des Schalungselements zur Tragstruktur hin geöffnet ist und insbesondere die Form des Stutzens so ausgebildet ist, dass das Schalungselement stapelbar und/oder mit sich selbst verlängerbar ausgebildet ist. Vorzugsweise weist hierzu ein der Stutzen auf einer Oberfläche, beispielsweise der außenseitigen Oberfläche, Vorsprünge oder Absätze auf, an denen auf der anderen Oberfläche, beispielsweise der innenseitigen Oberfläche des Stutzens befindliche komplementäre Vorsprünge oder Absätze abstützbar sind. Die Vorsprünge oder Absätze und ihre komplementären Gegenstücke können dann am Stutzen so ausgebildet sein, dass je nach Drehung des Stutzens, beispielsweise bei einer Drehung um jeweils 90°, entweder eine Stapelbarkeit (keine Abstützung durch komplementäre Vorsprünge) oder eine Verlängerung gegeben ist (Abstützung durch komplementäre Vorsprünge).

Eine weitere vorteilhafte Ausbildung besteht darin, dass der Sockel Ausnehmungen oder Markierungen aufweist, die für die Verbindung des Schalungselementes mit der Tragstruktur vorgesehene Stellen oder Bereiche markieren, beispielsweise Bohrungen oder Vertiefungen für Schraub- oder Stiftverbindungen. Eine solche Ausbildung erleichtert die Montage ebenso wie eine weitere vorteilhafte Ausbildung, die darin besteht, dass der Sockel und/oder Stutzen Markierungen zur Ausrichtung des Schalungselements auf der Tragstruktur und innerhalb des Leitungssystems aufweisen.

Eine weitere vorteilhafte Ausbildung besteht darin, dass das Schalungselement in Bezug auf seine Hochachse symmetrisch ausgebildet und mit symmetrisch angeordneten Anschlussquerschnitten versehen ist, beispielsweise im Sockelbereich vier rechtwinklig zueinander ausgerichtete Anschlussquerschnitte aufweist. Damit folgt man dem kostengünstigen Gleichteile-Prinzip und braucht in aller Regel nur eine Ausbildung von Schalungselementen für eine große Anzahl von Leitungssystemen. Anstelle einer Symmetrie an zwei sich im Winkel von 90° schneidenden Achsen kann auch eine andere Symmetrie vorliegen, bspw. bei einer Ausführung mit einem dreieckigen Sockel, einem hexa- oder oktogonalen Sockel.

Ein erfindungsgemäßes Kanal-, Kabel-, Rohr- oder Leitungssystem in einem Bodenbelag aus Estrich- oder Fließbeton weist somit vorzugsweise mehrere erfindungsgemäße, als verlorene Schalungen ausgebildete Schalungselemente in einer solchen Abmessung auf, dass der Einbau von Unterfluranschlussdose oder anderer Verteiler- oder Schalteinrichtungen in den Bodenbelag, d. h. innerhalb der durch die Schalungselemente nach Aushärtung des Fließbetons entstandenen Hohlräume, problemlos möglich ist.

Ein erfindungsgemäßes Verfahren zur Herstellung eines in einem Bodenbelag aus Estrich- oder Fließbeton eingebetteten Leitungssystems mit von außen zugänglichen und innerhalb des Estrich- oder Fließbetons angeordneten Hohlräumen für die Aufnahme von Unterfluranschlussdosen ist im Folgenden geschildert.

Vor dem Vergießen des Estrich- oder Fließbetons auf eine Boden- oder Tragstruktur werden die beschriebenen erfindungsgemäßen Schalungselemente anhand ihrer an Stutzen oder Sockel ausgebildeten Markierungen ausgerichtet und dann auf die Tragstruktur aufgebracht. Die Befestigungspunkte sind durch entsprechende am Sockel ausgebildete Ausnehmungen oder Markierungen festgelegt. Die Befestigung der Schalungselemente erfolgt üblicherweise durch Schrauben oder durch Schlagstifte bzw. Nägel, ist aber auch durch Verklebung oder mithilfe von Klebebändern oder Klebefolien möglich, wobei letztere die Ränder des Schalungselements teilweise übergreifen und auf dem Unterboden, d.h. der Tragstruktur fixieren.

Vor oder nach dem Aufbringen wird der Sockel der Schalungselemente im Bereich der Anschlussquerschnitte soweit abgeschnitten, gekürzt und geöffnet, dass die Dimension der Anschlussform des verbleibenden Anschlussquerschnitts mit den Dimensionen der anzuschließenden Kanäle, Rohre, Kabel oder Leitungen im Wesentlichen übereinstimmt.

Jeder der so vorbereiteten, geöffneten Anschlussquerschnitte wird mit einem Kabel oder einem offenen Ende einer Leitung, eines Rohres oder eines Kanals verbunden, vorzugsweise durch nahtüberdeckende Klebebänder oder Klebefolien. Auch die direkte Aneinanderreihung mehrerer der erfindungsgemäßen Schalungselemente an den Anschlussquerschnitten ist möglich.

Danach werden die Schalungselemente und die damit verbundenen Kanäle, Kabel oder Leitungen in Estrich oder Fließbeton vergossen und eingebettet, vorzugsweise bis zu einer Höhe, bei der die Stutzen der Schalungselement die sich einstellende Oberfläche des Estrichs oder Fließbetons nach oben überragen, wobei nach Aushärtung letztlich der überstehende Kopfbereich des Stutzens bis zur Oberfläche des Estrichs oder Fließbetons abgetrennt wird.

So entsteht ein bis auf die Öffnungen für die Anschlussdosen vollständig geschlossener Fußboden aus Fließestrich. Nach Abtrennen des Kopfbereichs des Stutzens kann das abgetrennte konische Kopfteil als temporärer Deckel und Schutz umgekehrt auf den geöffneten Stutzen gesetzt werden.

Sofern ein besonders dick ausgebildeter Fußboden aus Fließestrich hergestellt werden soll, werden die letzten beiden Verfahrensschritte so abgeändert, dass ein Kopfbereich des Stutzens abgetrennt wird, danach ein Verlängerungs-Rohrstück oder ein Adapter auf den verbleibenden Stutzen des Schalungselements aufgesetzt und sodann letzteres und die damit verbundenen Kanäle, Kabel oder Leitungen mit Estrich oder Fließbeton vergossen werden. Dies geschieht vorzugsweise bis zu einer Höhe, bei der das Verlängerungs-Rohrstück die sich einstellende Oberfläche des Estrichs oder Fließbeton nach oben überragt, wobei vorzugsweise das abgetrennte konische Kopfteil als temporärer Deckel umgekehrt auf das geöffnete Verlängerungs-Rohrstück gesetzt wird.

Anhand eines Ausführungsbeispiels soll die Erfindung näher erläutert werden. Es zeigen
- Fig. 1: ein erfindungsgemäßes Schalungselement in perspektivischer Darstellung,
- Fig. 2: das in der Fig. 1 dargestellte Schalungselement in einer etwa mittig geschnittenen Darstellung,
- Fig. 3: das in der Fig. 1 dargestellte Schalungselement in einer perspektivischen Ansicht,
- Fig. 4: das Schalungselement nach Fig. 1 und 3, jedoch mit einem abgeschnittenen, geöffneten Stutzen,
- Fig. 5: die Ausbildung eines Unterflur-Leitungssystems, mit den erfindungsgemäßen Schalungselementen.

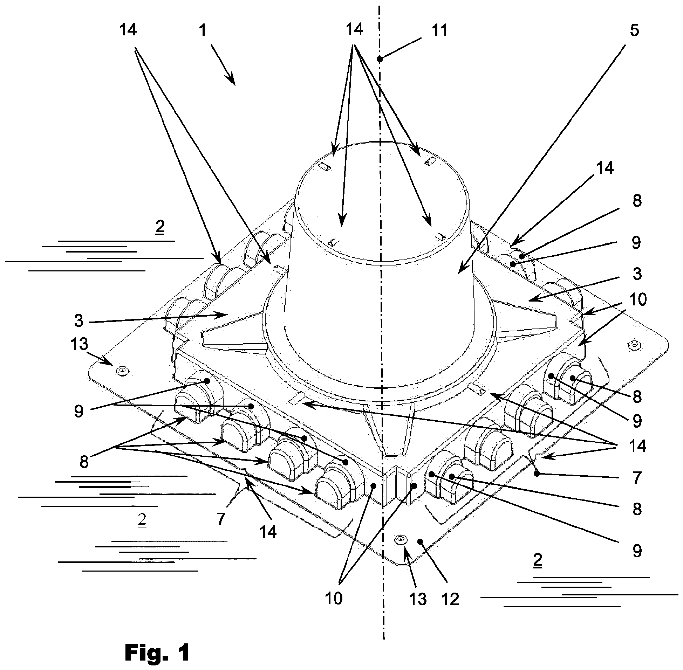

Die Fig. 1 zeigt ein erfindungsgemäßes Schalungselement 1 mit einem Sockel 3, der mit einer Tragstruktur verbindbar ist, hier nämlich einem Beton-Unterboden 2, auf dem ein Fließestrich angeordnet ist bzw. angeordnet wird. Der Fließestrich ist natürlich in den Fig. 1 bis 5 nicht dargestellt, da er nach Vergießen das Leitungssystem und das erfindungsgemäße Schalungselement bis auf den herausragenden Kopfbereich des Stutzens bedeckt.

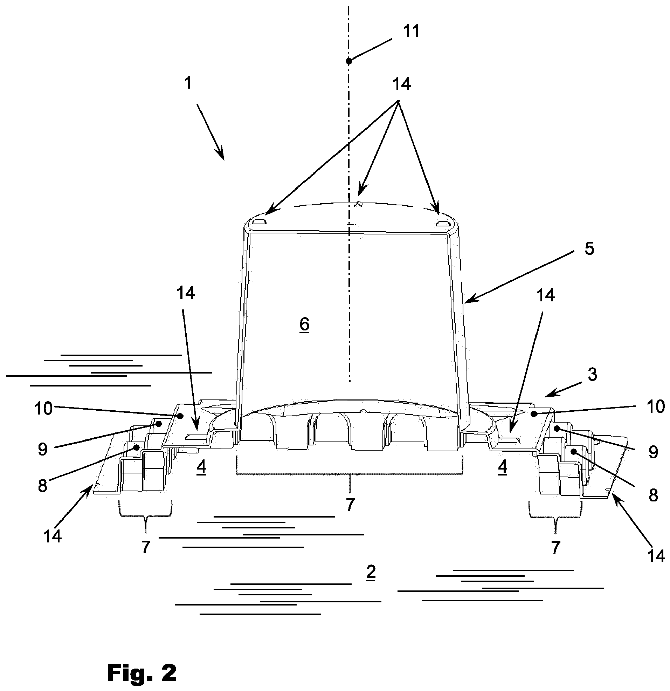

Fig.1 verdeutlicht weiterhin, dass das Schalungselement 1 einen von seinem Sockel 3 ausgehenden und der Tragstruktur abgewandten Stutzen 5 aufweist. Der Sockel 3 bildet innen einen ersten Hohlraum 4 aus, während der Stutzen 5 innen einen zweiten Hohlraum 6 ausbildet, wie in der Zusammenschau mit der Fig. 2 deutlich zu erkennen ist. Der Hohlraum 6 ist dabei so gestaltet, dass auch nach vergießen des Estrichs eine oberflächliche Zugänglichkeit zum Hohlraum erhalten bleibt, wie später noch ausgeführt wird. Der Hohlraum 6 ist darüber hinaus in Größe und Gestalt so ausgelegt, dass er für die Aufnahme einer Anschluss-, Schalt- oder Verteilereinrichtung des Leitungssystems geeignet ist.

Der durch den Sockel 3 gebildete erste Hohlraum 4 weist bei diesem Ausführungsbeispiel vier symmetrisch angeordnete und zueinander um 90° versetzte Anschlussquerschnitte 7 auf, an denen lateral und im Estrich einbettbare Kanäle, Kabel, Rohre oder Leitungen eines Leitungssystems anschließbar sind. Die Kanäle, Kabel, Rohre oder Leitungen sind in den Fig. 1 bis 4 der Übersichtlichkeit halber nicht dargestellt.

Das Schalungselement 1 ist unten, also zum Beton-Unterboden 2 hin, offen ausgebildet, wie Fig. 2 deutlich zeigt, und ist insgesamt als verlorene und im ausgehärteten Estrich verbleibende Schalung vorgesehen.

Der den ersten Hohlraum 4 bildende Sockel 3 des Schalungselements 1 weist im Bereich der Anschlussquerschnitte 7 jeweils vier halbrunde Anschlussformen 8 und 9 sowie eine eckige Anschlussform 10 auf, die jeweils auf entsprechende, unterschiedliche Formen von Kanälen, Kabeln, Rohren oder Leitungen des Leitungssystems angepasst sind. Ausgehend von einer Mittellinie 11 des Schalungselements 1, springt eine jeweils kleiner dimensionierte Anschlussform geringeren Volumens aus einer jeweils größer dimensionierten Anschlussform größeren Volumens lateral nach außen vor. Anstelle der sich stufenweise verringernden Volumina bzw. Abmessungen der Anschlusskonturen kann auch eine kontinuierliche Verjüngung erfolgen.

In diesem Ausführungsbeispiel springen also bei jedem der vier Anschlussquerschnitte 7 die kleiner dimensionierten und halbrund ausgebildeten Anschlussformen 8 aus den größer dimensionierten, ebenfalls halbrund ausgebildeten Anschlussformen 9 nach außen vor, während die Anschlussformen 9 aus der größten und eckig ausgebildeten Anschlussform 10 nach außen vorspringen. Die vier Anschlussquerschnitte 7 sind identisch ausgebildet und um 90° zueinander versetzt. Die einzelnen Anschlussformen sind nur dort mit Bezugsziffern 8, 9 und 10 versehen, wo die Übersichtlichkeit dies zulässt. Anstelle identischer Anschlussquerschnitte an allen Seiten können die Seiten auch unterschiedliche Anschlussquerschnitte aufweisen.

Der den zweiten Hohlraum 6 ausbildende Stutzen 5 des Schalungselements 1 verjüngt sich konisch nach oben hin, also zur sich ausbildenden Estrichoberfläche hin. Das Schalungselement 1 ist hier einstückig ausgebildet und besteht aus Kunststoff. Der Stutzen 5 ist hier so ausgebildet, dass er nach Erhärten der Estrichmasse über die Oberfläche des Estrichs hervorsteht und dann entsprechend bis zur Oberfläche gekürzt werden kann.

Der Kunststoff kann dabei so dünn ausgeführt sein, dass bei ausreichender Festigkeit des Schalungselementes zur Ausbildung von Hohlräumen beim Vergießen ein Abtrennen des Kopfbereich nach Aushärtung des Estrichs mit einfachen Werkzeugen, bspw. einem Cuttermesser oder einer Säge, ohne weiteres möglich ist. In jedem Fall ist die Wandstärke dazu ausgelegt, dem Druck des Estrichs standzuhalten. Die Wandstärke kann dabei auch vom Sockel zur Oberseite des Stutzens abnehmen. Außerdem können Verstärkungsstrukturen in dem Stutzen und/oder dem Sockel vorgesehen sein, bspw. Rippen oder dergleichen.

Die von der Sockelumrandung 12 überdeckte Grundfläche des Unterbodens 2 beträgt etwa 30 cm², während die Höhe des Stutzens 5 üblicherweise zwischen 15 und 30 cm liegt. Der zur Tragstruktur geöffnet ausgebildete Sockel 3 und die Form des Stutzens 5 erlauben, dass das Schalungselement stapelbar und für Transport und zur Montage leicht handhabbar ist.

Der Sockel 3 weist Bohr-Markierungen 13 aufweist, die die Stellen festlegen, an denen vorzugsweise Bohrungen für Schraub- oder Stiftverbindungen anzubringen sind, mit denen das Schalungselement auf dem Unterboden befestigt werden kann, bevor der Estrich vergossen wird. Weiterhin ist sowohl der Sockel 3 als auch der Stutzen 5 an verschiedenen Stellen mit Markierungen 14 versehen, mit deren Hilfe das Schalungselement auf der Tragstruktur entsprechend des geplanten Leitungssystems ausgerichtet werden kann, beispielsweise mithilfe eines Laserstrahls.

Fig. 2 zeigt das in der Fig. 1 dargestellte Schalungselement 1 in einer etwa mittig geschnittenen Darstellung, nämlich so, dass die durch das Schalungselement gebildeten Hohlräume geöffnet dargestellt sind. So erkennt man hier deutlich die Hohlräume 4 und 6 sowie die Hohlräume, die durch die gestuften Anschlussformen 8, 9 und 10 der Anschlussquerschnitte 7 gebildet werden. Auch sieht man noch einmal sehr deutlich, dass, wie oben bereits dargestellt, bei jedem der Anschlussquerschnitte 7 die kleiner dimensionierten und halbrund ausgebildeten Anschlussformen 8 aus den größer dimensionierten, ebenfalls halbrund ausgebildeten Anschlussformen 9 nach außen vorspringen, während die Anschlussformen 9 aus der größten und eckig ausgebildeten Anschlussform 10 nach außen vorspringt.

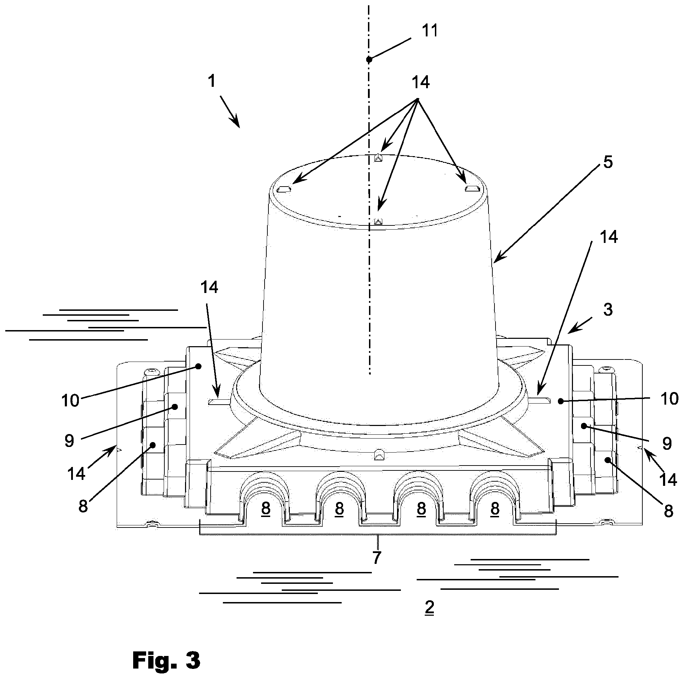

Fig. 3 zeigt das in der Fig. 1 dargestellte Schalungselement 1 in einer perspektivischen Ansicht. Man erkennt hier, dass bei dem in der Zeichnung vorderen Anschlussquerschnitt 7 des Sockels 3 die Anschlussformen 8 bereits verfahrensgemäß abgeschnitten und geöffnet worden sind, so dass sie an entsprechend dimensionierte, hier nicht näher dargestellten Leer- bzw. Leitungsrohre anschließbar sind, die zusammen mit weiteren solchen Einheiten schließlich das Leitungssystem bilden.

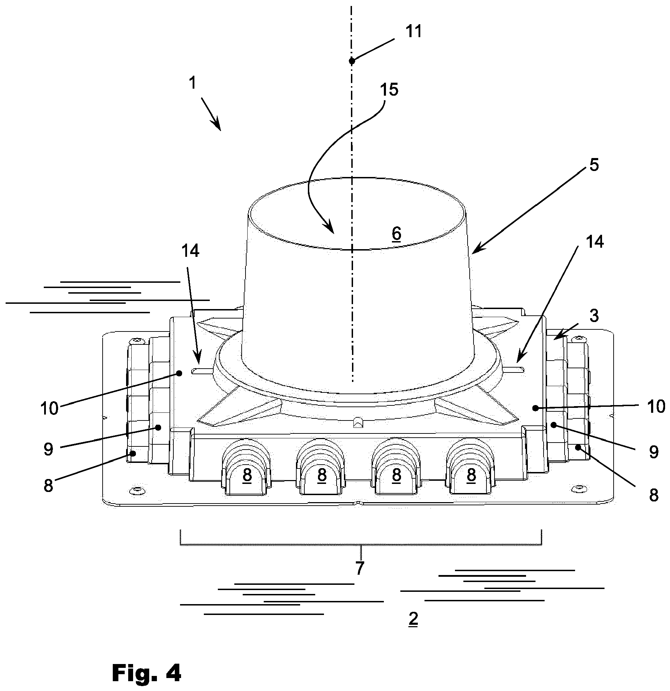

Fig. 4 zeigt ebenfalls das in der Fig. 1 dargestellte Schalungselement 1 in einer perspektivischen Ansicht, wobei hier jedoch in Kenntnis der zukünftigen maximalen Estrichhöhe der Stutzen 5 bereits abgeschnitten wurde, sodass sich nach Aushärten des Estrichs der der Hohlraum 6 innerhalb des Stutzens oberflächlich zugänglich ist, nämlich durch die Stutzenöffnung 15.

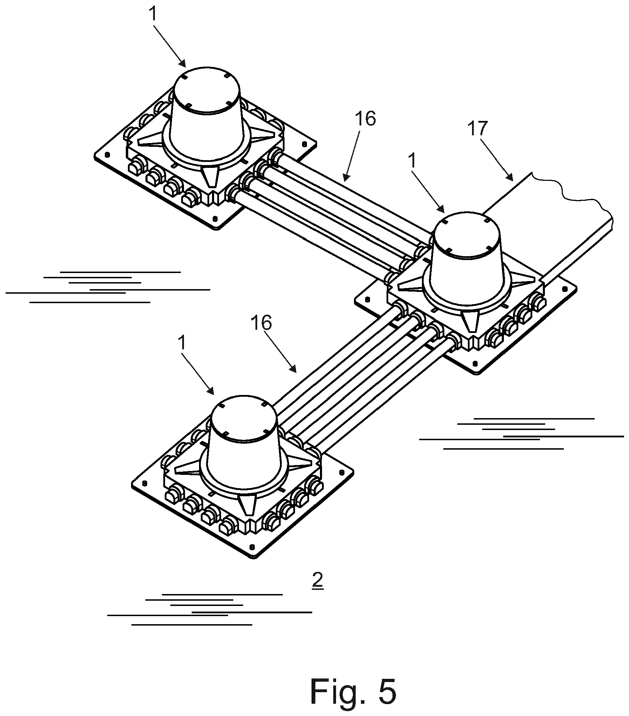

Fig. 5 zeigt prinzipiell die Ausbildung eines Unterflur-Leitungssystems, welches die erfindungsgemäßen Schalungselemente 1 aufweist. Deutlich ist hier zu sehen, dass an dem gleichen Schalungselement 1 sowohl rund oder halbrund ausgebildeten Leitungen angeschlossen werden können, hier Rohrleitungen 16, als auch eckig ausgebildete Kabelkanäle 17. Der jeweilige Anschluss an das Schalungselement 1 kann ohne weiteres und auf einfachste Weise dadurch erfolgen, dass der Sockel der Schalungselemente im Bereich des Anschlussquerschnitts soweit abgeschnitten und geöffnet wird, dass die Dimension der Anschlussform des verbleibenden Anschlussquerschnitt mit den Dimensionen der anzuschließenden Kanäle und Rohre übereinstimmt.

Während der Stutzen 5 in den Figuren mit einem runden Querschnitt dargestellt ist, kann er auch andere Querschnittsformen annehmen, bspw. rechteckig, quadratisch oder vieleckig.

### Bezugszeichenliste

- 1: Schalungselement
- 2: Beton-Unterboden
- 3: Sockel des Schalungselements
- 4: Hohlraum im Sockel
- 5: Stutzen des Schalungselements
- 6: Hohlraum im Stutzen
- 7: Anschlussquerschnitt
- 8: Anschlussform
- 9: Anschlussform
- 10: Anschlussform
- 11: Mittellinie
- 12: Sockelumrandung
- 13: Markierung am Sockel (Bohrungsmarkierungen)
- 14: Markierungen zur Ausrichtung
- 15: Stutzenöffnung
- 16: Rohrleitung
- 17: Kabelkanal

## Patentansprüche

1. Schalungselement (1) zur Formung von miteinander verbundenen und innerhalb einer umgebenden Masse eingebetteten Hohlräumen (4, 6), wobei
- das Schalungselement (1) einen Sockel (3) aufweist, der mit einer Tragstruktur (2) verbindbar ist, an der oder auf der die Masse angeordnet ist, und
- das Schalungselement (1) einen von seinem Sockel (3) ausgehenden und der Tragstruktur abgewandten Stutzen (5) aufweist,
- wobei der Sockel (3 mindestens einen ersten Hohlraum (4) ausbildet mit mindestens einem Anschlussquerschnitt (7) für lateral anschließbare und in der Masse einbettbare Kanäle, Kabel, Rohre oder Leitungen eines Leitungssystems, und
- wobei der Stutzen (5) mindestens einen zweiten oberflächlich zugänglichen Hohlraum (6) ausbildet zur Aufnahme einer Anschluss-, Schalt- oder Verteilereinrichtung des Leitungssystems,
**dadurch gekennzeichnet, dass** das Schalungselement (1) als verlorene und in der Masse verbleibende Schalung ausgebildet ist, wobei
- der den ersten Hohlraum (4) bildende Sockel (3) des Schalungselements (1) im Bereich eines Anschlussquerschnitts (7) mehrere auf unterschiedliche Formen von Kanälen, Kabeln, Rohren oder Leitungen des Leitungssystems angepasste Anschlussformen (8, 9, 10) aufweist, wobei
- mindestens einer der Anschlussquerschnitte (7) so ausgebildet ist, dass sich, ausgehend vom Zentrum bzw. von einer Mittellinie (11) des Schalungselements (1), unterschiedlich dimensionierte Anschlussformen (8, 9) aufeinander folgend nach außen erstrecken, bspw. Anschlussformen geringeren Volumens aus einer jeweils größer dimensionierten Anschlussform (9, 10) größeren Volumens nach außen vorspringen.

2. Schalungselement nach Anspruch 1, wobei das Schalungselement (1) einstückig ausgebildet ist.

3. Schalungselement nach Anspruch 1 oder 2, bei dem bei dem der Stutzen (5) nach außen über die Masse vorstehend ausgebildet ist.

4. Schalungselement nach einem der vorhergehenden Ansprüche, wobei der den zweiten Hohlraum (6) ausbildende Stutzen (5) des Schalungselements (1) sich ausgehend vom Sockel (3) und zur Oberfläche der umgebenden Masse hin konisch verjüngt.

5. Schalungselement nach einem der vorhergehenden Ansprüche, bei dem der Stutzen (5) Vorsprünge oder Absätze aufweist, an denen auf den Stutzen aufgesetzte Adapter oder Rohrstücke abstützbar sind.

6. Schalungselement nach einem der vorhergehenden Ansprüche, bei dem der Stutzen (5) an seinem äußeren Ende einen lösbaren Deckel oder einen für ein Abtrennen vorbereiteten Kopfbereich aufweist.

7. Schalungselement nach einem der vorhergehenden Ansprüche, bei dem der Sockel (3) im Bereich der Anschlussquerschnitte (7) lösbare Deckel, lateral gestuft ineinander gesteckte Endstücke oder abtrennbare laterale Endstücke aufweist.

8. Schalungselement nach einem der vorhergehenden Ansprüche, bei dem der Sockel (3) zur Tragstruktur hin geöffnet ist und die Form des Stutzens (5) so ausgebildet ist, dass das Schalungselement (1) stapelbar und/oder mit sich selbst verlängerbar ausgebildet ist.

9. Schalungselement nach einem der vorhergehenden Ansprüche, bei dem der Sockel (3) Ausnehmungen oder Markierungen (13) aufweist, die für die Verbindung des Schalungselements (1) mit der Tragstruktur (2) vorgesehene Stellen oder Bereiche markieren.

10. Schalungselement nach einem der vorhergehenden Ansprüche, bei dem der Sockel (3) und/oder der Stutzen (5) Markierungen zur Ausrichtung des Schalungselements auf der Tragstruktur (2) aufweisen.

11. Schalungselement nach einem der vorhergehenden Ansprüche, wobei das Schalungselement (1) in Bezug auf seine Hochachse symmetrisch ausgebildet und mit symmetrisch angeordneten Anschlussquerschnitten (7) versehen ist.

12. Leitungssystems aus Kanälen, Kabeln, Rohren oder Leitungen in einem Bodenbelag aus Estrich- oder Fließbeton, wobei das Leitungssystems mindestens ein Schalungselement nach Anspruch 1 bis 11 aufweist.

13. Verfahren zur Herstellung eines in einem Bodenbelag aus Estrich- oder Fließbeton eingebetteten Leitungssystems aus Kanälen, Kabeln, Rohren oder Leitungen, wobei das Leitungssystem von außen zugängliche und innerhalb des Estrich- oder Fließbetons angeordnete Hohlräume für die Aufnahme von Unterfluranschlussdosen oder Schalt- und Verteilerelementen aufweist, **gekennzeichnet durch** die folgenden Schritte:
- vor dem Vergießen des Estrich- oder Fließbetons auf eine Boden- oder Tragstruktur (2) werden Schalungselemente (1) nach Anspruch 1 bis 11 auf der Tragstruktur aufgebracht,
- vor oder nach dem Aufbringen wird der Sockel (3) der Schalungselemente im Bereich des Anschlussquerschnitts (7) soweit abgeschnitten, gekürzt und geöffnet, dass die Dimension der Anschlussform des verbleibenden Anschlussquerschnitts des Schalungselements zu den Dimensionen der anzuschließenden Kanäle, Kabelrohre oder Leitungen passt,
- der geöffnete verbleibende Anschlussquerschnitt (7) wird mit einem Kabel oder einem offenen Ende einer Leitung, eines Rohres oder eines Kanals verbunden, vorzugsweise durch nahtüberdeckende Klebebänder oder Klebefolien,
- danach werden die Schalungselemente und die damit verbundenen Kanäle, Kabel, Rohre oder Leitungen mit Estrich oder Fließbeton bis zu einer Höhe vergossen und eingebettet, bei der die Stutzen (5) der Schalungselement die sich einstellende Oberfläche des Estrichs oder Fließbetons nach oben überragen, wobei letztlich
- nach Aushärtung des Estrichs der überstehende Kopfbereich des Stutzens bis zur Oberfläche des Estrichs oder Fließbetons abgetrennt wird.

14. Verfahren nach Anspruch 13, bei dem nach Abtrennen des Kopfbereichs des Stutzens das abgetrennte konische Kopfteil als temporärer Deckel umgekehrt auf den geöffneten Stutzen gesetzt wird.

15. Verfahren nach Anspruch 13 oder 14, bei dem die letzten beiden Verfahrensschritte so abgeändert werden, dass ein Kopfbereich des Stutzens abgetrennt wird, danach ein Verlängerungs-Rohrstück oder ein Adapter auf den verbleibenden Stutzen des Schalungselements aufgesetzt und sodann letzteres und die damit verbundenen Kanäle, Kabel oder Leitungen mit Estrich oder Fließbeton bis zu einer Höhe vergossen werden, bei der das Verlängerungs-Rohrstück die sich einstellende Oberfläche des Estrichs oder Fließbetons nach oben überragt.
